# EUROPEAN PATENT APPLICATION

(11) **EP 3 831 790 A1**
(43) Date of publication of application: **09.06.2021**
(21) Application number: 18927455.8
(22) Date of filing: 06.09.2018
(51) Int. Cl.: C03C 23/00

(54) **LOW-E GLASS ANNEALING DEVICE**

(30) Priority: 27.07.2018 KR 20180087470
(71) Applicant: Cowindst Co., Ltd., Anyang-si, Gyeonggi-do 06651 (KR)
(72) Inventor: KIM, Seon Joo, Uiwang-si, Gyeonggi-do 16007 (KR); HA, Jae Kyun, Hwaseong-si, Gyeonggi-do 18412 (KR); PARK, Jae Woong, Anyang-si, Gyeonggi-do 13936 (KR); NOH, Jun Hyeong, Iksan-si, Jeollabuk-do 54637 (KR)
(74) Representative: Polo Flores, Carlos
(86) International application number: PCT/KR2018/010407
(87) International publication number: WO 2020/022551

(57) **Abstract**

Disclosed is a low-E glass annealing apparatus. This apparatus includes a transfer device for transferring a glass substrate on which a coating film is formed; a laser module installed at a position on a path of the transfer device and formed to stably form a coating film by radiating a laser beam on the glass substrate at a predetermined angle; and a pair of reflective mirrors installed at top and bottom positions of the glass substrate to face reflective surfaces each other, in front of a point where the glass substrate contacts with the laser beam in a laser beam radiating direction, so that reflected light or transmitted light of the laser beam may be reflected. According to the present invention, damages generated by thermal shock can be suppressed and energy efficiency can be enhanced although a low-E coating film is manufactured by heating a glass substrate using a laser module.

## Description

### BACKGROUND OF THE INVENTION

### Field of the Invention

The present invention relates to a low-E glass annealing apparatus, and more specifically, to a low-E glass annealing apparatus, which can lower thermal shock while enhancing thermal efficiency.

### Background of the Related Art

Development of techniques which can achieve high energy efficiency by reducing energy loss in the main energy consuming sectors, such as an industrial site, a building and the like, is always an important issue.

In a building, since windows and doors have an insulation characteristic of about eight to ten times lower than that of walls, heat loss through the windows and doors is so severe as to account for about 25 to 45% of the total heat loss of the building.

Accordingly, low-E glass (Low-Emissivity Glass) is used much to reduce heat loss through the windows and doors. The low-E glass has a structure of coating a metal film having high infrared reflectance (hereinafter, considered as containing a metal compound film of high reflectance in a broad sense) on one side of a general glass and may be formed in a single layer or a multilayer structure.

The metal film of the low-E glass transmits visible light and enhances lighting of a room, and reflects infrared light and reduces change of room temperature by reducing heat transfer between the inside and the outside of the room, and particularly, when the low-E glass is used in a hospital or a hotel where a heating and cooling system operates 24 hours, it may have a remarkable effect in reducing heating and cooling cost.

The low-E glass may be categorized into hard low-E by a pyrolytic process and soft low-E by a sputtering process, according to coating methods.

As a method of manufacturing hard low-E, a coating film is formed by spraying and thermally treating a metal solution or a metal powder on a sheet glass in the process of manufacturing the sheet glass. A coating material is generally a homogeneous material of metal oxide (e.g., SnO₂). An existing method of manufacturing hard low-E is thermal coating and is advantageous in that heat treatment such as reinforced processing or the like is possible owing to strong coating hardness and durability. However, it is disadvantageous in that the color is simple and the coating film is cloudy since use of various metals is limited.

On the other hand, as a method of manufacturing soft low-E, a previously manufactured float sheet glass is installed as a separate metal target plate of a vacuum chamber, and metals such as silver (Ag), titanium, stainless steel and the like are coated as a multilayer thin film. An existing method of manufacturing soft low-E has advantages of high transparency, various colors implemented using various metals, and excellent optical and thermal performance. However, compared with the hard low-E, coating hardness and durability are weak, and an edge stripping process facility is separately needed when a multilayer glass is manufactured.

Meanwhile, a laser heating method is one of various target object heating methods. A laser beam is generally obtained by expensive equipment, and although it is frequently used in the past to heat a bulky amount, it is known to be used much recently in an annealing process of a semiconductor substrate or a liquid crystal substrate. For example, an amorphous silicon film is formed on a liquid crystal substrate, and a laser annealing process is performed on the surface of the substrate to change the amorphous silicon film to polysilicon, or laser annealing can be used to inject an impurity into the semiconductor substrate, evenly distribute the impurity, and reduce crystalline defects.

The laser beam is able to heat up the substrate to a high temperature in a short time by abruptly supplying energy to a thin material at a relatively limited narrow space and abruptly cool down the substrate by interrupting supply of energy.

However, since a conventional method of radiating a laser beam on the surface of a glass substrate concentrates high energy in a short time, it may invite abrupt change in temperature of the glass, and the glass plate itself may be damaged by thermal shock, and since a large proportion of the laser beam passes through or reflected by the glass plate, only about 10% of the entire laser output is used for heating to form a coating film, and thus the thermal efficiency is low.

### SUMMARY OF THE INVENTION

Therefore, the present invention has been made in view of the above problems, and it is an object of the present invention to provide a low-E glass annealing apparatus which can solve the problems of thermal shock and energy efficiency, which are general problems of existing laser annealing, at the same time while using a laser beam, in annealing for formation of a low-E (low emissivity) coating film in the conventional method of manufacturing a low-E glass as described above.

Another object of the present invention is to provide a low-E glass annealing apparatus which can form a low-E coating film while proceeding a glass plate.

To accomplish the above objects, according to one aspect of the present invention, there is provided a low-E glass annealing apparatus comprising: a transfer device for transferring a glass substrate on which a coating film is formed; a laser module installed at a position on a path of the transfer device and formed to radiate a laser beam on the glass substrate at a predetermined angle with respect to the glass substrate; and a pair of reflective mirrors installed at top and bottom positions of the glass substrate to face reflective surfaces each other, in front of a point where the glass substrate contacts with the laser beam in a laser beam radiating direction, so that reflected light or transmitted light of the laser beam may be reflected.

The transfer device according to this embodiment may be configured to horizontally transfer the glass substrate.

In an embodiment, a traveling direction of the laser beam radiated at a predetermined tilt angle with respect to the glass substrate has a component of a direction opposite to a transfer direction of the glass substrate and a component of a direction opposite to a normal line perpendicular to a surface of the glass substrate.

In an embodiment, the laser beam is a line beam, and a line appearing on the surface of the glass substrate when the laser beam contacts with the glass substrate may be a line perpendicular to the progress direction of the glass substrate.

In an embodiment, the reflective mirrors may be parallel to the glass substrate, may have a predetermined angle with the glass substrate, or may form a predetermined tilt with the glass substrate, and the tilt direction is determined such that the position where the laser beam reflected by the reflective mirror pair meets the glass substrate is on the rear side on the basis of the progress direction of the glass substrate, compared with the position where the laser beam meets the glass substrate before the reflection.

At this point, a degree of the tilt or a magnitude of the angle should be adjusted and determined such that the number of times a laser beam, which is originated from a laser beam meeting the glass substrate first and reflected by the reflective mirror pair, meets again the glass substrate is sufficiently large, and power density of the laser beam deviating from the reflective mirror pair is sufficiently lowered, and an area or a section where the laser beam meets the glass substrate in the transfer direction of the glass substrate is not excessively narrow or wide.

At this point, although the upper and lower mirrors are symmetric based on the glass substrate and the tilts formed together with the glass substrate may be the same, also the tilt angles may be different from each other.

In this embodiment, the laser module may be configured by combining a plurality of laser beam sources to form line beams and arranging the laser beam sources to overlap adjacent laser beams with each other at a point where the power density become half.

In this embodiment, the upper and lower reflective mirrors configuring the reflective mirror pair are provided with cooling means on surfaces opposite to the surfaces facing each other and have a coating film formed on the surfaces to enhance reflectance.

### BRIEF DESCRIPTION OF THE DRAWINGS

FIG. 1 is a front view conceptually showing the configuration of a low-E glass annealing system according to an embodiment of the present invention.
FIG. 2 is a view conceptually showing a configuration for line beam radiation of a laser module that can be used in the present invention.
FIG. 3 is a view of graphs respectively showing change of light intensity according to the position of a unit line beam radiated on a glass substrate from an individual laser head configuring the laser module of FIG. 2.
FIG. 4 is a view showing change of output density according to an incident angle of a laser beam with respect to a glass substrate in the present invention.
FIGS. 5 to 7 are conceptual views showing installation of a reflective mirror pair, illustrating energy efficiency of a laser beam according to the reflective mirror pair for reflecting a laser beam and change of the incident angle of the laser beam.

### DESCRIPTION OF SYMBOLS

| | |
|---|---|
| 10: Glass substrate | 20: Transfer device |
| 30: Laser module | 31, 32: Individual laser head |
| 40: Reflective mirror pair | 41, 42: Reflective mirror |
| 45, 47: Cooling means | 51, 53: Laser protection cover |
| 61, 62: Unit line beam | |

### DETAILED DESCRIPTION OF THE PREFERRED EMBODIMENT

Hereinafter, the present invention will be described in detail through the specific embodiments with reference to the accompanying drawings.

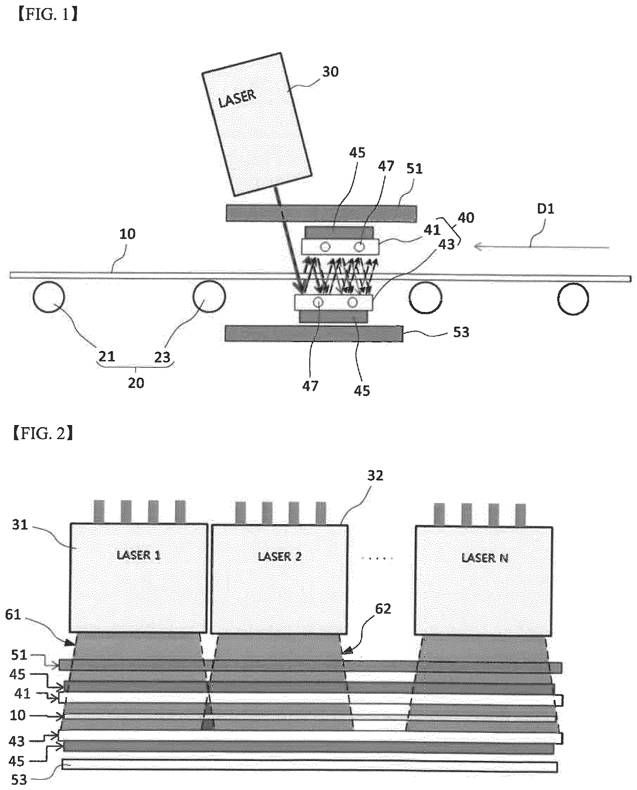

FIG. 1 conceptually shows the configuration of a low-E glass annealing system which anneals a glass substrate by heating, using a laser, a coating film already formed on the surface of a glass in the previous step while horizontally transferring the glass substrate to manufacture a low-E glass.

The low-E glass annealing system according to this embodiment basically includes a transfer device 20, a laser module 30 and a reflective mirror pair 40. The low-E glass annealing system irradiates a metal film on a glass substrate 10 with a laser beam so that annealing may take place while light energy of the laser beam is converted to thermal energy on the surface, to effectively crystallize the metal film and to have a low emissivity characteristic of the low-E glass including a metal coating film.

Here, a low-E coating film layer is formed on the glass substrate 10 in the previous step, and the transfer device 20 transfers the glass substrate 10 from the right to the left, i.e., in a first direction D1, in a horizontal state through rollers 21 and 23. The laser module 30 is installed at a position on the path of the transfer device 20 and formed to radiate a laser beam on the glass substrate 10 at a predetermined angle with respect to the glass substrate.

A pair of reflective mirrors 41 and 43 are installed at the top and bottom positions of the glass substrate 10, in front of (on right side of) a point where the glass substrate 10 contacts with the laser beam in the laser beam radiating direction, so that most of reflected light or transmitted light of the laser beam may be reflected. The pair of reflective mirrors 41 and 43 are provided to face reflective surfaces each other. Cooling means 41 and 43 for preventing overheat by the laser beam are provided in the pair of reflective mirrors 41 and 43, and a coating for enhancing reflectance may be formed on the surface. The cooling means may maintain a constant temperature by emitting heat to the outside through the wide area or discharging the heat to the outside through circulation of a coolant.

Laser protection covers 51 and 53 are installed on the top and bottom of the reflective mirror pair, and a camera (not shown) for checking a processing state or a laser beam state in real-time may be installed to monitor a processed part of the glass substrate.

Here, the laser module 30 may operate to maintain the annealing temperature of the metal film between 500 and 650°C as needed. At this point, the temperature may be affected by all of change of laser output, an incident angle of the laser beam with respect to the glass substrate, a tilt angle formed by a reflective mirror configuring the reflective mirror pair and the glass substrate, and a change in the transfer speed of the glass substrate.

Here, the laser module 30 radiates a laser beam slanted in a direction opposite to the transfer direction of the glass substrate 10. Describing more accurately, the traveling direction of the laser beam radiated at a predetermined tilt angle with respect to the glass substrate has a component of a direction opposite to the transfer direction of the glass substrate 10 and a component of a direction opposite to the normal line perpendicular to the surface of the glass substrate.

Meanwhile, the laser beam is a kind of line beam, and a line (segment) appearing on the surface of the glass substrate when the laser beam contacts with the glass substrate 10 may be a line perpendicular to the progress direction of the glass substrate.

Here, the camera not shown in the figure is for monitoring the crystalized metal film (coating film) on the glass substrate 10, passing through the cooling area. The camera is a configuration of the monitoring system and may be connected to a monitor of the monitoring system through a wired or wireless network.

The camera and the monitor are an example of the monitoring system, which are means capable of confirming a state of the crystalized metal film or a heat treatment state of the glass substrate 10, and may be replaced with another monitoring means performing a corresponding function.

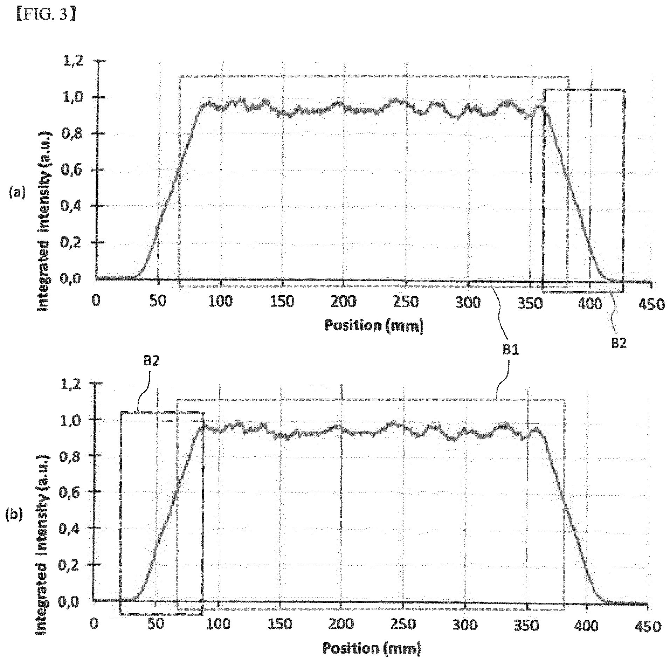

FIG. 2 is a view schematically showing a shape of a cross-section seeing from the right to the left, after cutting into a plane perpendicular to the progress direction of the glass substrate 10 at the position of the reflective mirror pair 40, together unit line beams 31 and 32 configuring a laser beam and individual laser heads 31 and 32 configuring a laser module, and FIG. 3 is a view of graphs respectively showing change of light intensity according to the position of the unit line beams 61 and 62 radiated on the glass substrate 10 from the individual laser heads 31 and 32 configuring the laser module of FIG. 2.

Referring to these figures, the laser module is configured by arranging a plurality of individual laser heads 31 and 32 in parallel to each other and to be perpendicular to the progress direction of the glass substrate, and the individual laser heads 31 and 32 adjacent to each other are arranged almost not to have a separating distance. It may be confirmed that the unit line beam 61 radiated from the individual laser head 31 gradually spreads in the width direction (in the direction of arranging the individual laser heads) as the laser beam progresses and is partially overlapped with the unit line beam 62 radiated from the adjacent individual laser head 32. The individual laser heads 31 and 32 themselves may be configured to combine several base lasers and generate unit line beams 61 and 62 by combining the laser beams emitted from the base lasers.

If the unit line beams are successively combined, an overall line beam parallel to the top surface of the glass substrate 10 and extended in a direction perpendicular to the transfer direction of the glass substrate 10 is configured. If a high power large line beam (laser beam) is used, a wide glass plate can be effectively and uniformly heat-treated.

Referring to the graphs of FIG. 3, light intensity (integrated intensity) of a laser beam at a position where a unit line beam contacts with the glass substrate maintains a predetermined level in most of the width section, and light intensity of the laser beam attenuates almost linearly at both ends in the width direction having a slightly spread shape. To make such a shape, the unit laser head and a line beam spread shape are designed such that the light intensity or energy distribution at both ends of the unit laser head is 50% of those at the center portion (where the light intensity is highest). Here, the large dotted box area B1 at the center shows the size or width of an individual laser head, and the small dotted box area B2 at both ends shows an area at least partially overlapped with the unit line beam emitted from the adjacent individual laser head.

As a result, since both ends between the unit laser beams are overlapped, a predetermined level of light intensity can be maintained at the both ends in the width direction of the unit line beam or in the area between adjacent individual laser heads, like the light intensity at the center portion of the unit line beam, and the coating film (metal film) of the glass substrates may have the same low-E coating film state as the coating film is processed at the same annealing temperature. If the two graphs of FIGS. 3(a) and (b) are placed on a single horizontal line in the described order and arranged to be adjacent to each other in the width direction, at least part of the areas B2 easily show the effect of overlapping the laser beams.

Meanwhile, the reflective mirrors may be parallel to the glass substrate, may have a predetermined angle with the glass substrate, or may form a predetermined tilt with the glass substrate. At this point, it is preferable that the tilt direction is determined such that the position where the laser beam reflected by the reflective mirror pair meets the glass substrate is on the rear side on the basis of the progress direction of the glass substrate, compared with the position where the laser beam meets the glass substrate before the reflection,

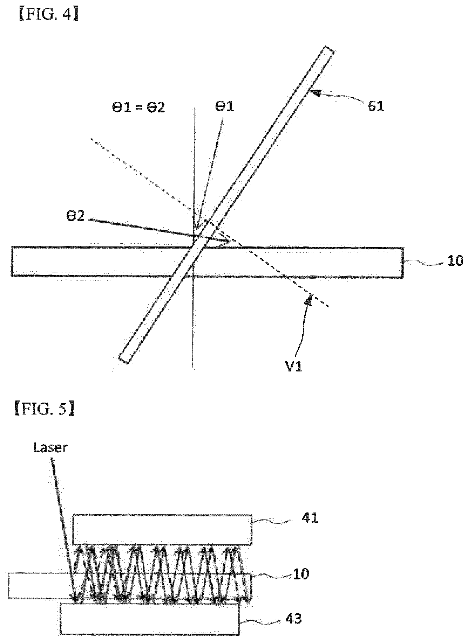

As shown in FIG. 4, a degree of the tilt or a magnitude of the angle should be adjusted and determined such that the number of times a laser beam, which is originated from a laser beam meeting the glass substrate first at a predetermined angle θ1 and reflected by the reflective mirror pair, meets again the glass substrate at a predetermined angle θ2 is sufficiently large, and power density of the laser beam deviating from the reflective mirror pair is sufficiently lowered, and an area or a section where the laser beam meets the glass substrate in the transfer direction of the glass substrate (see D1 of FIG. 1) is not excessively narrow or wide. At this point, although the upper and lower mirrors are symmetric based on the glass substrate and the tilts formed together with the glass substrate may be the same, the tilt angles may be different from each other.

The power density of the laser beam may correspond to power density of the initial laser beam, the normal line of the glass substrate, and the incident angle of the initial laser beam, i.e., a cosine angle (cosθ). The power density of the laser beam according to the incident angle is as shown in Table 1.

**[Table 1]**

| Angle | Power Density (%) |
|---|---|
| 0 | 100 |
| 5 | 99.62 |
| 10 | 98.48 |
| 15 | 96.59 |
| 20 | 93.97 |
| 25 | 90.63 |
| 30 | 86.60 |

FIGS. 5 to 7 are views showing the shapes of a laser beam reflected by the reflective mirror pair.

Here, each reflective mirror of the reflective mirror pair is configured to adjust a tilt or an angle with respect to the glass substrate. In addition, it is configured to adjust the incident angle of the laser beam radiated from the laser module with respect to the glass substrate.

Referring to FIG. 5, the reflective mirror pair is formed to be parallel to the glass substrate, and the incident angle of the initial laser beam radiated from the laser module onto the glass substrate is 10 degrees. If it is assumed that a metal film for low emissivity is formed on the top surface of the glass substrate, the upper and lower reflective mirrors are installed to space apart the inner sides of the upper and lower reflective mirrors from the top surface of the glass substrate by the same distance.

Since the reflective mirrors have a very high reflectance as much as, for example, 99%, it may be simply regarded that almost all the laser beams arriving at the reflective mirrors are reflected.

In the figure, the laser beam is radiated from the upper and slightly left side toward the lower and slightly right side of the glass substrate and arrives at the glass substrate. Part of the laser beam is converted to heat and heats up (anneals) the coating film to make a stable low-E glass coating film. Part of the laser beam is reflected by the glass substrate, part of the laser beam transmits through the glass substrate, and part of the transmitted laser beam is reflected by the lower reflective mirror 43 and arrives at the glass substrate again, and part of the laser beam is converted to heat, part of the laser beam is reflected, and part of the laser beam transmits through. In addition, in this process, all the laser beams moving upward are reflected by the upper reflective mirror 41 and move downward again, and in that process, part of the laser beam meeting the glass substrate is converted to heat, part of the laser beam is reflected, and part of the laser beam transmits through.

This phenomenon occurs on all surfaces where reflection and transmission are possible, and as reflection, transmission and thermal conversion are repeated between the two reflective mirrors, the laser beam, as a result, moves to the right side little by little and consumes all the energy in the space between the pair of reflective mirrors while repeating reflection (reflection on the surface of the reflective mirror and reflection on the surface of the glass substrate) and transmission (transmits through the glass substrate) up and down in a zigzag form.

Assuming a continuous process of repeating movement of the glass substrate and radiation of a laser beam, a specific portion of the glass substrate first enters the inner space of the reflective mirror pair and is heated by a weakened laser beam that has been reflected and transmitted several times, meets a stronger laser beam while gradually moving toward the right side, and meets the strongest laser beam at a position where the laser beam meets the glass substrate first, and thus annealing is accomplished at the highest temperature.

Accordingly, since the glass substrate is gradually heated in the inner space of the reflective mirror pair as it moves, thermal shock generated as a strong laser beam is abruptly radiated at a low temperature and the glass substrate is abruptly heated can be reduced, and the laser beam is used for annealing of the coating film as the laser beam is converted to heat when it meets the glass substrate several times in the inner space.

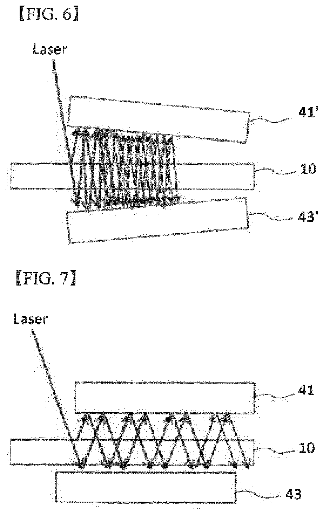

In FIG. 6, although the incident angle of the laser beam maintains 10 degrees as shown in FIG. 5, the position of the reflective mirror is adjusted to set the angle that the reflective mirror makes together with the glass substrate, i.e., a tilt angle, to about five degrees, not zero.

In this case, although the laser beam repeats transmission and reflection as shown in FIG. 5 and moves to the right side little by little since the tilts of the reflective mirrors are not high, the moving distance is decreased, and the heating is done within a short distance.

Referring to FIG. 7, compared with the case of FIG. 5, the angles between the glass substrate and the reflective mirrors, i.e., the tilt angles, are set to zero to be the same, and only the incident angle of the laser beam is set to be larger, i.e. 20 degrees.

In this case, the number of times the laser beam meets the glass substrate while moving back and forth between the upper and lower reflective mirrors in a zigzag form is reduced, and residual energy of the laser beam getting out of the inner space between the pair of reflective mirrors increases, and thus thermal efficiency or the heat conversion rate of the laser beam is lowered.

Seeing the examples described above, if the section of repeating the reflection and transmission (a distance on the transfer path) is too small although the number of times of reflection and transmission of the laser beam is large, the effect of placing the reflective mirror pair and gradually heating the glass substrate is lowered, and the effect of mitigating the thermal shock is also lowered.

Contrarily, if the number of time of reflection and transmission itself is too small, the chances of converting the light energy of the laser beam to heat on the coating film on the surface of the glass substrate are also lowered, and the energy efficiency is also lowered.

Accordingly, it needs to design a transfer speed of the glass substrate, an angle between the reflective mirror and the glass substrate, a distance (length) of the section covered by the reflective mirror, and an incident angle of the laser beam considering these points, a temperature needed for annealing the low-E glass coating film and a time for maintaining the temperature.

For example, the laser module may be arranged to be spaced apart form the glass substrate by a predetermined distance, and the distance may be about 100 to 300 mm. The laser beam may have a shape increasing the beam width overall in the length direction of a line beam while traveling from the laser module to the glass plate, and the beam width of the line beam may be 1 mm. The transfer speed of a large glass substrate on the transfer device may be 50 to 200 mm/s. The annealing temperature of the metal film may be about 500 to 650°c, and power density of the laser beam directly applied on the glass substrate is preferably 50 W/mm² or higher at the coating film portion considering the thickness of a material of a metal coating film or a metal oxide coating film of a general low-E glass.

Although it is natural geometrically, power density of the laser beam on the substrate is a value obtained by multiplying power density of the vertical cross-section of the initial laser beam by a cosine value of the incident angle, and since the larger the incident angle, the lower the power density of the laser beam on the substrate, power density at the incident angles of 10, 20 and 30 degrees becomes 98.5%, 93.97% and 86.6% of the power density of the vertical cross-section of the initial laser beam.

According to the embodiment like this, since the surface of a metal film can be selectively heat-treated at a high temperature while controlling the heat treatment temperature of the metal film by combining one or more unit laser heads, effective crystallization of the metal film can be achieved.

Although not shown in the figure, the low-E glass annealing apparatus according to this embodiment may include a control device. The control device may include a microcomputer or a computing device, and the computing device may include a processor and a memory. In this case, the control device is connected to the laser module and the transfer device and may control operation of the laser module. In addition, according to implementation, the control device may be configured to be connected to a driving device or an actuator of the reflective mirror pair and control the reflection angle of the reflective mirror pair.

The control device described above operates such that the light energy reflected by or transmitted through the surface of the metal film is not focused on the surface of the metal film and formed in a spread shape and preheats the metal film of the low-E glass through the mirrors arranged on both sides. In addition, the control unit is configured to focus the laser beam on the surface of the preheated metal film so that only the metal film is influenced by the laser energy through the control of operation of the transfer device and the laser module.

The main object of this embodiment is to make crystalloid by performing laser heat treatment on an amorphous metal film, and it is configured to focus on the surface of the metal film so that only the metal film is influenced by the laser energy in the process. As shown in the embodiment described above, light energy reflected by or transmitted through the surface of the metal film is not focused and formed in a spread shape and preheats the metal film of the low-E glass through the mirrors arranged on both sides. That is, seeing the reflection direction of the laser beam and the direction of entering the glass, before the direct light focused and directly radiated on the low-E metal film layer is radiated, a process of preheating the low-E metal film using light of relatively low power density, reflected by a mirror, is performed, and then heating is performed by the focused direct light. According to the configuration of the embodiment like this, performance of the single low-E glass can be effectively enhanced by crystallizing the surface of the single low-E glass.

In addition, according to the configuration of this embodiment, the method of heating the low-E metal film by a laser beam is advantageous in that change of property to a tempered glass by heating the glass is not generated since only the metal layer on the surface of the glass is heated, without heating the entire glass, at a wavelength transmitting the glass.

Meanwhile, since the glass can be broken if temperature of only the glass around the metal film abruptly increases as the low-E metal film is heated, it is configured to pass through an abrupt temperature rising step by direct light after going through a pre-heating process as shown in this embodiment. Like this, according to this embodiment, performance of a non-tempered low-E glass can be stably improved in the process of manufacturing a low-E glass by a glass manufacturer.

On the other hand, an object of the present invention is basically improving performance of a soft low-E glass. However, the present invention is not limited thereto and may be applied to production of hard low-E. In this case, since a hard low-E glass has a production structure in which heat treatment of a low-E layer is performed while passing through a separate tempering process, the low-E glass annealing apparatus of this embodiment can be applied when a hard low-E glass is used as a non-tempered low-E glass.

According to the present invention, damages generated by thermal shock can be suppressed and energy efficiency can be enhanced although a low-E coating film is manufactured by heating a glass substrate using a laser module.

Although the present invention has been described through the limited embodiments, it is illustrated only to help understanding of the present invention and is not limited to the specific embodiments. That is, those skilled in the art may embody diverse changes or application examples on the basis of the present invention, it is to be appreciated that the modified examples or the application example fall within the scope of the present invention.

## Claims

1. A low-E glass annealing apparatus comprising:
a transfer device for transferring a glass substrate on which a coating film is formed;
a laser module installed at a position on a path of the transfer device to convert the coating film to a stable coating film by radiating a laser beam on the glass substrate at a predetermined angle with respect to the glass substrate; and
a pair of reflective mirrors installed at top and bottom positions of the glass substrate to face at least part of reflective surfaces each other, in front of a point where the glass substrate contacts with the laser beam in a laser beam radiating direction, so that reflected light or transmitted light of the laser beam may be reflected.

2. The apparatus according to claim 1, wherein the laser module is configured such that a traveling direction of the laser beam radiated at a predetermined angle with respect to the glass substrate has a component of a direction opposite to a transfer direction of the glass substrate and a component of a direction opposite to a normal line perpendicular to a surface of the glass substrate, and
the reflective mirror is parallel to the glass substrate or forms a predetermined tilt with the glass substrate, and a tilt direction is determined such that a position where the laser beam reflected by the reflective mirror pair meets the glass substrate is on a rear side on the basis of a progress direction of the glass substrate, compared with a position where the laser beam meets the glass substrate before the reflection, so that the glass substrate may be preheated at the rear side.

3. The apparatus according to claim 1 or 2, wherein the laser beam is a line beam parallel to the surface of the glass substrate while contacting with the glass substrate and perpendicular to the progress direction of the glass substrate, wherein
the line beam is formed to maintain light intensity or power density uniform in all line beams by adjusting light intensity or power density of portions overlapped with each other at end portions of a width direction of unit line beams adjacent to each other, among unit line beams radiated from a plurality of individual laser heads arranged in the width direction parallel to the line beam to form the laser module, to a level the same as light intensity or power density of a center portion of the unit line beam.

4. The apparatus according to claim 3, wherein light intensity or power density at a position of the unit line beam corresponding to a position outside the individual laser head in the width direction is adjusted to a level as much as a half (50%) of the light intensity or the power density formed by the individual laser head at a position of a center portion of the unit line beam.

5. The apparatus according to claim 1 or 2, wherein the laser module may adjust the predetermined angle of radiating the laser beam and adjust an angle formed between the reflective mirror configuring the reflective mirror pair and the glass substrate.

6. The apparatus according to claim 1 or 2, wherein power density of the laser beam applied to the glass substrate is 50 W/mm² or higher.
